(19) Europäisches Patentamt
European Patent Office
Office européen des brevets

(11) EP 3 252 062 B1

(12) EUROPEAN PATENT SPECIFICATION

(45) Date of publication and mention of the grant of the patent:
**30.11.2022 Bulletin 2022/48**

(21) Application number: **15880068.0**

(22) Date of filing: **22.10.2015**

(51) International Patent Classification (IPC):
***C07F 7/18*** *(2006.01)* ***B60C 1/00*** *(2006.01)*
***C08G 77/28*** *(2006.01)* ***C08G 77/48*** *(2006.01)*
***C08K 5/548*** *(2006.01)* ***C08L 21/00*** *(2006.01)*
***C08L 83/08*** *(2006.01)* ***C08L 83/14*** *(2006.01)*
***C08G 77/18*** *(2006.01)*

(52) Cooperative Patent Classification (CPC):
(C-Sets available)
**C08L 21/00; B60C 1/00; C07F 7/18; C08G 77/18; C08G 77/28; C08G 77/48; C08K 5/548; C08L 9/06; C08L 83/08; C08L 83/14** (Cont.)

(86) International application number:
**PCT/JP2015/079788**

(87) International publication number:
**WO 2016/121175 (04.08.2016 Gazette 2016/31)**

(54) **ORGANOPOLYSILOXANE, RUBBER COMPOUNDING AGENT, RUBBER COMPOSITION, AND TIRE**

ORGANOPOLYSILOXAN, GUMMIAUFBEREITUNGSMITTEL, KAUTSCHUKZUSAMMENSETZUNG UND REIFEN

ORGANOPOLYSILOXANE, AGENT DE COMPOUNDAGE DE CAOUTCHOUC, COMPOSITION DE CAOUTCHOUC ET PNEU

(84) Designated Contracting States:
**DE FR GB**

(30) Priority: **26.01.2015 JP 2015012317**

(43) Date of publication of application:
**06.12.2017 Bulletin 2017/49**

(73) Proprietor: **Shin-Etsu Chemical Co., Ltd.**
**Tokyo 100-0004 (JP)**

(72) Inventors:
- **HIROKAMI Munenao**
  **Annaka-shi**
  **Gunma 379-0224 (JP)**
- **TSUCHIDA Kazuhiro**
  **Annaka-shi**
  **Gunma 379-0224 (JP)**

(74) Representative: **Mewburn Ellis LLP**
**Aurora Building**
**Counterslip**
**Bristol BS1 6BX (GB)**

(56) References cited:
**EP-A1- 2 857 449**
**EP-A2- 2 679 617**
**WO-A1-2014/002750**
**WO-A1-2014/129664**
**JP-A- 2014 028 797**
**JP-A- 2014 214 091**
**JP-A- 2014 214 091**
**US-A- 4 753 976**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/06, C08L 83/08;**
**C08L 21/00, C08L 83/06;**
**C08L 21/00, C08L 83/08**

## Description

### TECHNICAL FIELD

The present invention relates to a novel organopolysiloxane which contains a sulfide group-containing organic group, and additionally relates to a rubber compounding ingredient, a rubber composition and a tire.

### BACKGROUND ART

Sulfur-containing organosilicon compounds are useful as essential ingredients in the manufacture of tires made of silica-filled rubber compositions. Silica-filled tires have an enhanced performance in automotive applications; the wear resistance, rolling resistance and wet grip properties in particular are outstanding. Such enhanced tire performance is closely associated with improved (lower) fuel consumption, and is currently under active investigation.

Increasing the silica loading of the rubber composition is essential for improving fuel consumption. However, although silica-filled rubber compositions lower the tire rolling resistance and improve the wet grip properties, there are problems with the workability in that such compositions have a high viscosity in the unvulcanized form and require, for example, multistage milling. Hence, in rubber compositions within which an inorganic filler such as silica is merely blended, one drawback is that, owing to inadequate dispersion of the filler, major decreases in the failure strength and wear resistance arise. Sulfur-containing organosilicon compounds have therefore been essential for increasing the dispersibility of inorganic filler in rubber and also for inducing chemical bonding between the filler and the rubber matrix: see JP-B S51-20208.

Compounds which include an alkoxysilyl group and a polysulfide silyl group on the molecule, such as bis(triethoxysilylpropyl)tetrasulfide and bis(triethoxysilylpropyl)disulfide, are known to be effective as sulfur-containing organosilicon compounds: see JP-A 2004-525230, JP-A 2004-18511, JP-A 2002-145890 and U.S. Pat. No. 6,229,036.

Aside from the above polysulfide group-containing organosilicon compounds, the use of the following compounds is also known: thioester-type blocked mercapto group-containing organosilicon compounds which are advantageous for silica dispersibility, and sulfur-containing organosilicon compounds of a type obtained by transesterification of an amino alcohol with a hydrolysable silyl group moiety advantageous for affinity with silica via hydrogen bonds: see JP-A 2005-8639, JP-A 2008-150546, JP-A 2010-132604, JP No. 4571125, U.S. Pat. No. 6,414,061.

However, even with the use of such sulfur-containing organosilicon compounds, rubber compositions for tires that realize the desired low fuel consumption properties have yet to be obtained. Moreover, aside from the high costs compared with sulfide compounds, various other challenges remain, such as problems with productivity on account of the complex manufacturing process.

JP Pat. No. 5574063 (equivalent to WO2014/02750 and EP-A-2857449) presents examples in which polysiloxanes having polysulfide groups and long-chain alkyl groups are used. However, the sulfide equivalent weight is large and rubber compositions for tires that achieve desired low fuel consumption properties are not obtained.

Our JP-A-2014/214091 describes methods for producing organopolysiloxanes containing a hydrolysable group together with a sulfide group and/or a mercapto group. Example 2 makes an organopolysiloxane of the formula:

$$(\text{-}C_3H_6\text{-}S_4\text{-}C_3H_6\text{-})_{0.25}(\text{-}C_8H_{17})_{0.50}(\text{-}OC_2H_5)_{1.50}SiO_{0.75}$$

Our EP-A-2679617 describes organopolysiloxanes containing a sulfide group, long-chain alkyl and hydrolysable group, for use in improving the shelf stability of epoxy resin compositions.

WO2014/129664 (equivalent to EP-A-2960285) describes tire rubber compositions containing natural rubber, silica, carbon black and a polysiloxane coupling agent of the formula $(A)_a(B)_b(C)_c(D)_d(E)_eSiO_{(4-2a-b-c-d-e)/2}$ in which A is divalent organo group including sulfide, B is hydrocarbon of 5-10 carbon atoms, C is a hydrolysable group, D is mercapto-containing group, E is hydrocarbon group of 1-4 carbon atoms, $0 \le a < 1$, $0 \le b < 1$, $0 < c < 3$, $0 < d < 1$, $0 \le e < 2$ and $0 < 2a+b+c+d+e < 4$, one of a and b being non-zero.

### SUMMARY OF THE INVENTION

### PROBLEMS TO BE SOLVED BY THE INVENTION

The present invention was arrived at in the light of the above circumstances. An object of the invention is to provide an organopolysiloxane which, when used in tire production, achieves the desired low fuel consumption properties and is able to greatly reduce hysteresis loss in the cured rubber composition. Other objects of the invention are to provide a rubber compounding ingredient containing this organopolysiloxane, a rubber composition formulated with the rubber compounding ingredient, and a tire formed using the rubber composition.

MEANS FOR SOLVING THE PROBLEMS

The inventors have conducted extensive investigations in order to achieve the above objects. As a result, they have discovered that rubber compositions which use a rubber compounding ingredient composed primarily of an organopolysiloxane that contains a sulfide group-containing organic group, a monovalent hydrocarbon group of 5 to 10 carbon atoms such as a long-chain alkyl group and a hydrolysable group and/or a hydroxyl group, and which have a sulfide equivalent weight of 500 to 800 g/mol satisfy the low fuel consumption properties desired of tires.

Accordingly, the invention provides the following organopolysiloxane, use thereof as a rubber compounding ingredient, rubber composition and tire.

A first aspect is an organopolysiloxane as specified in claim 1 of average compositional formula (1) below, which contains a sulfide group-containing organic group and has a sulfide equivalent weight of 500 to 800 g/mol

$$(A)_a(B)_b(C)_c(R^1)_dSiO_{(4-2a-b-c-d)/2} \qquad (1)$$

wherein A is a sulfide group-containing divalent organic group, B is a monovalent hydrocarbon group of 5 to 10 carbon atoms, C is a hydrolysable group and/or a hydroxyl group, $R^1$ is a monovalent hydrocarbon group of 1 to 4 carbon atoms, and the subscripts a, b, c and d satisfy the conditions $0 < 2a < 1, 0 < b < 1, 0 < c < 3, 0 \leq d < 2$ and $0 < 2a+b+c+d < 4$.

The sulfide group-containing divalent organic group A may have formula (2) below

$$*-(CH_2)_n-S_x-(CH_2)_n-* \qquad (2)$$

wherein n is an integer from 1 to 10, x is a statistical average value from 1 to 6, and *- and -* represent bonding sites; and the hydrolysable group and/or hydroxyl group C may have formula (3) below

$$*-OR^2 \qquad (3)$$

wherein $R^2$ is an alkyl group of 1 to 20 carbon atoms, an aryl group of 6 to 10 carbon atoms, an aralkyl group of 7 to 10 carbon atoms, an alkenyl group of 2 to 20 carbon atoms, or a hydrogen atom, and *- represents a bonding site.

B in average compositional formula (1) may be a monovalent hydrocarbon group of 8 to 10 carbon atoms.

The organopolysiloxane may comprise a co-hydrolytic condensation product of:

20 to 95 mol% of an organosilicon compound of general formula (4) below

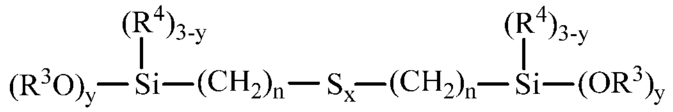

(4)

wherein n is an integer from 1 to 10, x is a statistical average value from 1 to 6, $R^3$ is an alkyl group of 1 to 20 carbon atoms, an aryl group of 6 to 10 carbon atoms, an aralkyl group of 7 to 10 carbon atoms, or an alkenyl group of 2 to 10 carbon atoms, $R^4$ is an alkyl group of 1 to 10 carbon atoms or an aryl group of 6 to 10 carbon atoms, and y is an integer from 1 to 3;

5 to 80 mol% of an organosilicon compound of general formula (5) below

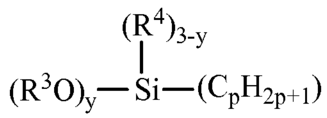

(5)

wherein $R^3$, $R^4$ and y are as defined above, and p is an integer from 5 to 10; and

0 to 10 mol% of an organosilicon compound of general formula (6) below

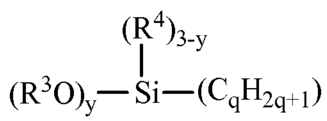

(6)

wherein $R^3$, $R^4$ and y are as defined above, and q is an integer from 1 to 4.

Another aspect (claim 10) is the use of such organopolysiloxane as a rubber compounding ingredient in a rubber composition containing a silica filler.

A further aspect (claim 11) is a rubber compounding ingredient comprising the organopolysiloxane.

The rubber compounding ingredient may further comprise at least one type of powder, wherein the weight ratio of the organopolysiloxane (A) to the at least one type of powder (B), expressed as (A)/(B), is from 70/30 to 5/95.

A further aspect (claim 14) is a rubber composition comprising the rubber compounding ingredient.

A further aspect (claim 15) is a tire formed using the rubber composition.

## ADVANTAGEOUS EFFECTS OF THE INVENTION

Because the organopolysiloxane of the invention contains, respectively, a sulfide group-containing organic group, a monovalent hydrocarbon groups of 5 to 10 carbon atoms such as a long-chain alkyl group and a hydrolysable group and/or hydroxyl group, and moreover because it has a relatively small sulfide equivalent weight and thus a high sulfide group content, tires formed using a rubber composition in which a rubber compounding ingredient composed primarily of this organopolysiloxane is used are able to satisfy the low fuel consumption properties desired of tires.

## EMBODIMENTS FOR CARRYING OUT THE INVENTION

The organopolysiloxane containing, respectively, a sulfide group-containing organic group, a monovalent hydrocarbon group of 5 to 10 carbon atoms such as a long-chain alkyl group and a hydrolysable group and/or a hydroxyl group is represented by average compositional formula (1) below and has a sulfide equivalent weight of 500 to 800 g/mol.

$$(A)_a(B)_b(C)_c(R^1)_dSiO_{(4-2a-b-c-d)/2} \qquad (1)$$

In the formula, A is a sulfide group-containing divalent organic group, B is a monovalent hydrocarbon group of 5 to 10 carbon atoms, C is a hydrolysable group and/or a hydroxyl group, $R^1$ is a monovalent hydrocarbon group of 1 to 4 carbon atoms, and the subscripts a, b, c and d satisfy the conditions $0 < 2a < 1$, $0 < b < 1$, $0 < c < 3$, $0 \leq d < 2$ and $0 < 2a+b+c+d < 4$.

In formula (1), A is a sulfide group-containing divalent organic group, preferably one having formula (2) below

$$*\text{-}(CH_2)_n\text{-}S_x\text{-}(CH_2)_n\text{-}* \qquad (2)$$

In this formula, n is an integer from 1 to 10, preferably from 2 to 4; x is a statistical average value from 1 to 6, preferably from 2 to 4; and *- and -* represent bonding sites.

Examples of the sulfide group-containing divalent organic group include

-CH2-S2-CH2- ,

-C2H4-S2-C2H4- ,

-C3H6-S2-C3H6- ,

$-C_4H_8-S_2-C_4H_8-$ ,

-CH2-S4-CH2- ,

-C2H4-S4-C2H4- ,

$-C_3H_6-S_4-C_3H_6-$ , and

$-C_4H_8-S_4-C_4H_8-$ .

B is a monovalent hydrocarbon group of 5 to 10 carbon atoms, preferably 8 to 10 carbon atoms. Exemplary monovalent hydrocarbon groups include alkyl groups of 5 to 10 carbon atoms, such as linear, branched or cyclic pentyl, hexyl, octyl and decyl groups; and aryl groups of 6 to 10 carbon atoms, such as phenyl, tolyl and naphthyl groups. Linear, branched or cyclic alkyl groups are preferred; of these, octyl and decyl groups are more preferred.

C is a hydrolysable group and/or a hydroxyl group, preferably one of formula (3) below.

$*\text{-}OR^2$ (3)

In this formula, $R^2$ is an alkyl group of 1 to 20, preferably 1 to 5, and more preferably 1 to 3 carbon atoms, an aryl group of 6 to 10 carbon atoms, an aralkyl group of 7 to 10 carbon atoms, an alkenyl group of 2 to 10, and preferably 2 to 4 carbon atoms, or a hydrogen atom. Also, *- represents a bonding site. The proportion of the $-OR^2$ groups that are -OH groups (where $R^2$ is a hydrogen atom) is preferably from 0 to 30 mol%, and more preferably from 0 to 10 mol%.

In formula (3), examples of alkyl groups that may serve as $R^2$ include methyl, ethyl, propyl, butyl, hexyl, octyl, decyl and octadecyl groups; examples of aryl groups include phenyl, tolyl and naphthyl groups; examples of aralkyl groups include the benzyl group; and examples of alkenyl groups include vinyl, propenyl and pentenyl groups. Of these $R^2$ is preferably an ethyl group.

In formula (1), $R^1$ is a monovalent hydrocarbon group of 1 to 4 carbon atoms. Examples of monovalent hydrocarbon groups include alkyl groups such as methyl, ethyl and propyl groups. Of these, a methyl group is preferred.

The subscripts a, b, c and d satisfy the conditions $0 < 2a < 1$, $0 < b < 1$, $0 < c < 3$, $0 \leq d < 2$ and $0 < 2a+b+c+d < 4$. In order to set the subsequently described sulfide equivalent weight within the prescribed range, it is preferable for $0.2 \leq 2a \leq 0.95$, $0.05 \leq b \leq 0.8$, $1 \leq c \leq 2$, $0 \leq d \leq 0.1$ and $1.3 \leq 2a+b+c+d < 4$; and more preferable for $0.4 \leq 2a \leq 0.95$, $0.05 \leq b \leq 0.6$, $1 \leq c \leq 1.7$, $0 \leq d \leq 0.05$ and $1.5 \leq 2a+b+c+d < 4$.

Here, a, b and d signify the average number of moles of the respective organic groups when the total number of moles of silicon atoms is 1, and thus indicate the average mol% of the respective organic groups included per molecule. The reason for using the notation "2a" is that A represents a divalent organic group. In addition, c indicates the average mol% of hydrolyzable groups included on silicon atoms per mole of silicon atoms.

The organopolysiloxane of the invention has a sulfide equivalent weight of 500 to 800 g/mol.

As used herein, the "sulfide equivalent weight" of an organopolysiloxane refers to the weight of the organopolysiloxane that contains 1 mole of sulfide groups, and is derived from the following formula.

$$\text{Sulfide equivalent weight} = 32.1 \times e \times 100/f \ \ (\text{g/mol})$$

In the formula, e is the average sulfur chain length of the sulfide group, and f is the sulfur content (wt%) within the organopolysiloxane.

At a sulfide equivalent weight greater than 1,000 g/mol, the dispersibility in rubber of the filler when used as a treatment agent is inadequate, as a result of which, for instance, the wear resistance and reliability of silica-filled tires may be inferior; that is, the desired effects are not obtained. In the organopolysiloxane of the invention, in order to have the sulfide equivalent weight fall within the above range, it is preferable to set the subscripts a to d in formula (1) within the ranges indicated above. A sulfide equivalent weight within the prescribed range can be achieved by, for example, adjusting the proportions in which the various organosilicon compounds serving as starting materials are reacted during preparation of the organopolysiloxane in such a way as to satisfy the respective ranges for a to d above.

The sulfur content within the organopolysiloxane of the invention is preferably from 6 to 30 wt%, and more preferably from 7 to 28 wt%. When the sulfur content is too low, the sulfide equivalent weight becomes larger, as a result of which the desired rubber properties may not be obtained. When the sulfur content is too high, no further improvements in the advantageous effects are obtained, making such a high sulfur content uneconomical. The sulfur content is the value measured by elemental analysis using, for example, a Mod-1106 analyzer from CARLO ERBA.

The organopolysiloxane of the invention has a viscosity which is preferably from 2 $mm^2/s$ to 10,000 $mm^2/s$, and more preferably from 10 $mm^2/s$ to 5,000 $mm^2/s$. When the viscosity is too large, the processability may worsen. The viscosity is based on measurements taken at 25°C with a capillary-type kinematic viscometer.

Preparation of the organopolysiloxane is carried out by the co-hydrolytic condensation of:

an organosilicon compound of general formula (4) below

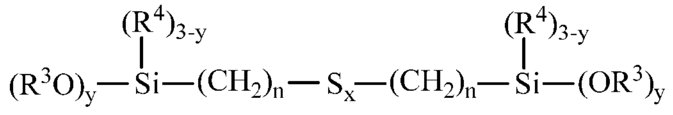

(4)

(wherein n and x are as defined above; $R^3$ is an alkyl group of 1 to 20, preferably 1 to 5, and more preferably 1 to 3 carbon atoms, an aryl group of 6 to 10 carbon atoms, an aralkyl group of 7 to 10 carbon atoms, or an alkenyl group of 2 to 10, and preferably 2 to 4 carbon atoms; $R^4$ is an alkyl group of 1 to 10, and preferably 1 to 3 carbon atoms or an aryl group of 6 to 10 carbon atoms; and y is an integer from 1 to 3, and especially 2 or 3),

an organosilicon compound of general formula (5) below

$$(R^3O)_y-\overset{(R^4)_{3-y}}{\overset{|}{Si}}-(C_pH_{2p+1}) \quad (5)$$

(wherein $R^3$, $R^4$ and y are as defined above, and p is an integer from 5 to 10, and preferably from 8 to 10), and, optionally, an organosilicon compound of general formula (6) below

$$(R^3O)_y-\overset{(R^4)_{3-y}}{\overset{|}{Si}}-(C_qH_{2q+1}) \quad (6)$$

(wherein $R^3$, $R^4$ and y are as defined above, and q is an integer from 1 to 4, and preferably from 1 to 3).

In above formulas (4) to (6), examples of alkyl groups that may serve as $R^3$ include methyl, ethyl, propyl, butyl, hexyl, octyl, decyl and octadecyl groups; examples of aryl groups include phenyl, tolyl and naphthyl groups; examples of aralkyl groups include the benzyl group; and examples of alkenyl groups include vinyl, propenyl and pentenyl groups. Of these $R^3$ is preferably an ethyl group.

Examples of alkyl groups that may serve as $R^4$ include methyl, ethyl, propyl, butyl, hexyl, octyl and decyl groups; and examples of aryl groups include phenyl, tolyl and naphthyl groups. Of these, $R^4$ is preferably a methyl group.

Examples of the organosilicon compound of formula (4) include, without particular limitation, bis(trimethoxysilylpropyl)tetrasulfide, bis(triethoxysilylpropyl)tetrasulfide, bis(trimethoxysilylpropyl)disulfide and bis(triethoxysilylpropyl)disulfide.

Examples of the organosilicon compound of formula (5) include, without particular limitation, pentyltrimethoxysilane, pentylmethyldimethoxysilane, pentyltriethoxysilane, pentylmethyldiethoxysilane, hexyltrimethoxysilane, hexylmethyldimethoxysilane, hexyltriethoxysilane, hexylmethyldiethoxysilane, octyltrimethoxysilane, octylmethyldimethoxysilane, octyltriethoxysilane, octylmethyldiethoxysilane, decyltrimethoxysilane, decylmethyldimethoxysilane, decyltriethoxysilane and decylmethyldiethoxysilane.

Examples of the organosilicon compound of formula (6) include, without particular limitation, methyltrimethoxysilane, dimethyldimethoxysilane, methyltriethoxysilane, methylethyldiethoxysilane, propyltrimethoxysilane, propylmethyldimethoxysilane and propylmethyldiethoxysilane.

Here, the amounts of the organosilicon compounds of formulas (4), (5) and (6) used are selected in such a way as to set subscripts a to d in formula (1) within the above-indicated ranges. Specifically, with respect to the overall amount of the organosilicon compounds of formulas (4), (5) and (6), the organosilicon compound of formula (4) is used in an amount of preferably 20 to 95 mol%, more preferably 30 to 95 mol%, and especially 40 to 95 mol%; the organosilicon compound of formula (5) is used in an amount of preferably 5 to 80 mol%, more preferably 5 to 70 mol%, and especially 5 to 60 mol%; and the organosilicon compound of formula (6) is used in an amount of preferably 0 to 10 mol%, and more preferably 0 to 5 mol%.

Co-hydrolytic condensation may be carried out by a known method. The amount of water used may also be set to a known amount. In general, from 0.5 to 0.99 mole, and more preferably from 0.5 to 0.9 mole, per mole of the sum of the hydrolysable silyl groups in the organosilicon compound may be used.

Where necessary, an organic solvent may be used to prepare the organopolysiloxane of the invention. Examples of the solvent include, without particular limitation, aliphatic hydrocarbon solvents such as pentane, hexane, heptane and decane; ether solvents such as diethyl ether, tetrahydrofuran and 1,4-dioxane; amide solvents such as formamide, dimethylformamide and N-methylpyrrolidone; aromatic hydrocarbon solvents such as benzene, toluene and xylene; and alcohol solvents such as methanol, ethanol and propanol. Of these, from the standpoint of outstanding hydrolytic reactivity, ethanol and i-propanol are preferred. When using such a solvent, the amount of use is not particularly limited, although it is preferably not more than about twice the weight of the organosilicon compound, and more preferably not more than about the same weight as the organosilicon compound.

Also, where necessary, a catalyst may be used to prepare the organopolysiloxane of the invention. Examples of the catalyst include, without particular limitation, acidic catalysts such as hydrochloride acid and acetic acid; Lewis acid catalysts such as tetrabutyl orthotitanate and ammonium fluoride; alkali metal salts such as sodium hydroxide, potassium hydroxide, sodium carbonate, sodium acetate, potassium acetate, sodium bicarbonate, potassium carbonate, potassium bicarbonate, calcium carbonate, sodium methoxide and sodium ethoxide; and amine compounds such as triethylamine, tributylamine, pyridine and 4-dimethylaminopyridine. An example of a catalyst that may be used for the

hydrolysis (and/or partial condensation) of silane is hydrochloric acid. An example of a catalyst that may be used for the condensation (oligomerization) of silanol is potassium hydroxide. The amount of catalyst (when a silane hydrolysis reaction catalyst and a silanol condensation reaction catalyst are used together, the amounts of each), from the standpoint of excellent reactivity, is preferably from 0.001 to 0.05 (unit: mole equivalent) per mole of the sum of the hydrolysable silyl groups in the organosilicon compound.

Co-hydrolytic condensation is typically carried out at 20 to 100°C, especially 60 to 85°C, and for 30 minutes to 20 hours, especially 1 minute to 10 hours.

The rubber compounding ingredient of the invention includes the organopolysiloxane (A) of the invention. Alternatively, a mixture obtained by mixing the organopolysiloxane (A) of the invention beforehand with at least one type of powder (B) may be used as the rubber compounding ingredient. Examples of the powder (B) include carbon black, talc, calcium carbonate, stearic acid, silica, aluminum hydroxide, alumina and magnesium hydroxide. From the standpoint of the reinforcing properties, silica and aluminum hydroxide are preferred. Silica is especially preferred.

The content of the powder (B), expressed as the weight ratio of component (A) to component (B) ((A)/(B)), is preferably from 70/30 to 5/95, and more preferably from 60/40 to 10/90. When the amount of the powder (B) is too small, the rubber compounding ingredient becomes liquid and charging into a rubber mixer may be difficult. When the amount of the powder (B) is too large, the overall amount relative to the effective dose of rubber compounding ingredient becomes high, as a result of which the transport costs may rise.

The rubber compounding ingredient of the invention may be mixed with a fatty acid, a fatty acid salt, or an organic polymer or rubber such as polyethylene, polypropylene, polyoxyalkylene, polyester, polyurethane, polystyrene, polybutadiene, polyisoprene, natural rubber or styrene-butadiene copolymer. Various types of additives that are commonly included in rubber compositions for use in tires and for use in other common rubbers, such as vulcanizing agents, crosslinking agents, vulcanization accelerators, crosslinking accelerators, and various oils, antioxidants, fillers and plasticizers, may also be included. The rubber compounding ingredient may be in the form of a liquid or solid, or may be in a form obtained by dilution in an organic solvent or by emulsification.

The rubber compounding ingredient of the invention is preferably used in rubber compositions containing a filler, and especially silica.

In this case, it is desirable for the rubber compounding ingredient to be added in an amount, per 100 parts by weight of the filler included in the rubber composition, of from 0.2 to 30 parts by weight, and especially from 1 to 20 parts by weight. When the amount of organopolysiloxane added is too small, the desired rubber properties may not be obtained. On the other hand, when it is too large, no further improvements in the advantageous effects are obtained for the amount of addition, making further addition uneconomical.

Here, the rubber included as the chief constituent in the rubber composition that uses the rubber compounding ingredient of the invention may be any rubber that has hitherto been commonly included in various types of rubber compositions. For example, the following may be used, either singly or as blends thereof: natural rubbers (NR), isoprene rubbers (IR), diene rubbers such as various types of styrene-butadiene copolymer rubbers (SBR), various types of polybutadiene rubbers (BR), acrylonitrile-butadiene copolymer rubbers (NBR) and butyl rubbers (IIR), and ethylene-propylene copolymer rubbers (EPR, EPDM). The filler included is exemplified by silica, talc, clay, aluminum hydroxide, magnesium hydroxide, calcium carbonate and titanium oxide. The filler content may be set to a content commonly used in the art, provided that doing so does not work against the objects of the invention.

Rubber compositions which use the rubber compounding ingredient of the invention may further include, in addition to the above essential ingredients: various additives that are commonly included in rubber compositions for use in tires and for use in other common rubbers, such as carbon black, vulcanizing agents, crosslinking agents, vulcanization accelerators, crosslinking accelerators, and various oils, antioxidants and plasticizers. The contents of these additives may be set to ordinary levels hitherto used in the art, provided that doing so does not work against the objects of the invention.

In these rubber compositions, although it is also possible for the organopolysiloxane of the invention to substitute for a known silane coupling agent, another silane coupling agent may be optionally added as well; any silane coupling agent that has hitherto been used together with a silica filler may be added. Typical examples of such silane coupling agents include vinyltrimethoxysilane, vinyltriethoxysilane, γ-glycidoxypropyltrimethoxysilane, γ-glycidoxypropyltriethoxysilane, γ-aminopropyltriethoxysilane, β-aminoethyl-γ-aminopropyltrimethoxysilane, β-aminoethyl-γ-aminopropyltriethoxysilane, γ-mercaptopropyltrimethoxysilane, γ-mercaptopropyltriethoxysilane, γ-methacryloxypropyltrimethoxysilane, γ-methacryloxypropyltriethoxysilane, γ-acryloxypropyltrimethoxysilane, γ-acryloxypropyltriethoxysilane, bis(triethoxysilylpropyl)tetrasulfide and bis(triethoxysilylpropyl)disulfide.

Rubber compositions formulated with the rubber compounding ingredient of the invention can be used after being kneaded and rendered into a composition by an ordinary method and then vulcanized or crosslinked.

The tire of the invention is characterized by using the above-described rubber composition, with this rubber composition preferably being used in the treads. The tire of the invention has a greatly reduced rolling resistance and also has a greatly enhanced wear resistance, thus enabling the desired low fuel consumption to be achieved. Also, the

tire of the invention has a hitherto known structure that is not particularly limited, and can be manufactured by an ordinary process. In cases where the tire of the invention is a pneumatic tire, the gas used to fill the interior of the tire may be ordinary air or air having a regulated oxygen partial pressure, or may be an inert gas such as nitrogen, argon or helium.

## EXAMPLES

The invention is illustrated more fully below by way of Working Examples and Comparative Examples, although these Examples are not intended to limit the invention. In the following Examples, parts are given by weight, "Et" stands for an ethyl group, and elemental analysis was carried out by measurement with a Mod-1106 analyzer from CARLO ERBA. The viscosities are values measured at 25°C using a capillary-type kinematic viscometer.

### Working Example 1 [Comparison; outside the invention]

A one-liter separable flask equipped with a stirrer, a reflux condenser, a dropping funnel and a thermometer was charged with 161.7 g (0.3 mol) of bis(triethoxysilylpropyl)tetrasulfide (KBE-846, from Shin-Etsu Chemical Co., Ltd.), 165.9 g (0.6 mol) of octyltriethoxysilane (KBE-3083, from Shin-Etsu Chemical Co., Ltd.) and 162.0 g of ethanol, following which 16.2 g of 0.5 N aqueous hydrochloric acid (water, 0.9 mol) was added dropwise at room temperature. The flask contents were then stirred for 2 hours at 80°C, after which filtration was carried out, followed by the dropwise addition of 7.8 g of a 5 wt% KOH/EtOH solution and 2 hours of stirring at 80°C. Vacuum concentration and filtration afforded a clear brown liquid having a viscosity of 80 $mm^2/s$. Elemental analysis was carried out, whereupon the resulting silicone oligomer was found to have a sulfur content of 14.7 wt%, a sulfide equivalent weight of 870 g/mol and the average compositional formula shown below. This oligomer was called Oligomer 1.

$$(-C_3H_6-S_4-C_3H_6-)_{0.25}(-C_8H_{17})_{0.50}(-OC_2H_5)_{1.50}SiO_{0.75}$$

### Working Example 2

A one-liter separable flask equipped with a stirrer, a reflux condenser, a dropping funnel and a thermometer was charged with 161.7 g (0.3 mol) of bis(triethoxysilylpropyl)tetrasulfide (KBE-846, from Shin-Etsu Chemical Co., Ltd.), 138.3 g (0.5 mol) of octyltriethoxysilane (KBE-3083, from Shin-Etsu Chemical Co., Ltd.) and 162.0 g of ethanol, following which 14.9 g of 0.5 N aqueous hydrochloric acid (water, 0.83 mol) was added dropwise at room temperature. The flask contents were then stirred for 2 hours at 80°C, after which filtration was carried out, followed by the dropwise addition of 7.2 g of a 5 wt% KOH/EtOH solution and 2 hours of stirring at 80°C. Vacuum concentration and filtration afforded a clear brown liquid having a viscosity of 220 $mm^2/s$. Elemental analysis was carried out, whereupon the resulting silicone oligomer was found to have a sulfur content of 16.1 wt%, a sulfide equivalent weight of 796 g/mol and the average compositional formula shown below. This oligomer was called Oligomer 2.

$$(-C_3H_6-S_4-C_3H_6-)_{0.27}(-C_8H_{17})_{0.45}(-OC_2H_5)_{1.50}SiO_{0.75}$$

### Working Example 3

A one-liter separable flask equipped with a stirrer, a reflux condenser, a dropping funnel and a thermometer was charged with 161.7 g (0.3 mol) of bis(triethoxysilylpropyl)tetrasulfide (KBE-846, from Shin-Etsu Chemical Co., Ltd.), 110.6 g (0.4 mol) of octyltriethoxysilane (KBE-3083, from Shin-Etsu Chemical Co., Ltd.) and 162.0 g of ethanol, following which 13.5 g of 0.5 N aqueous hydrochloric acid (water, 0.75 mol) was added dropwise at room temperature. The flask contents were then stirred for 2 hours at 80°C, after which filtration was carried out, followed by the dropwise addition of 6.5 g of a 5 wt% KOH/EtOH solution and 2 hours of stirring at 80°C. Vacuum concentration and filtration afforded a clear brown liquid having a viscosity of 800 $mm^2/s$. Elemental analysis was carried out, whereupon the resulting silicone oligomer was found to have a sulfur content of 17.8 wt%, a sulfide equivalent weight of 723 g/mol and the average compositional formula shown below. This oligomer was called Oligomer 3.

$$(-C_3H_6-S_4-C_3H_6-)_{0.30}(-C_8H_{17})_{0.40}(-OC_2H_5)_{1.50}SiO_{0.75}$$

Working Example 4

A one-liter separable flask equipped with a stirrer, a reflux condenser, a dropping funnel and a thermometer was charged with 161.7 g (0.3 mol) of bis(triethoxysilylpropyl)tetrasulfide (KBE-846, from Shin-Etsu Chemical Co., Ltd.), 83.0 g (0.3 mol) of octyltriethoxysilane (KBE-3083, from Shin-Etsu Chemical Co., Ltd.) and 162.0 g of ethanol, following which 12.2 g of 0.5 N aqueous hydrochloric acid (water, 0.68 mol) was added dropwise at room temperature. The flask contents were then stirred for 2 hours at 80°C, after which filtration was carried out, followed by the dropwise addition of 5.9 g of a 5 wt% KOH/EtOH solution and 2 hours of stirring at 80°C. Vacuum concentration and filtration afforded a clear brown liquid having a viscosity of 2,000 $mm^2/s$. Elemental analysis was carried out, whereupon the resulting silicone oligomer was found to have a sulfur content of 19.8 wt%, a sulfide equivalent weight of 649 g/mol and the average compositional formula shown below. This oligomer was called Oligomer 4.

$$(-C_3H_6-S_4-C_3H_6-)_{0.33}(-C_8H_{17})_{0.33}(-OC_2H_5)_{1.50}SiO_{0.75}$$

Working Example 5

A one-liter separable flask equipped with a stirrer, a reflux condenser, a dropping funnel and a thermometer was charged with 210.2 g (0.39 mol) of bis(triethoxysilylpropyl)tetrasulfide (KBE-846, from Shin-Etsu Chemical Co., Ltd.), 83.0 g (0.3 mol) of octyltriethoxysilane (KBE-3083, from Shin-Etsu Chemical Co., Ltd.) and 162.0 g of ethanol, following which 13.0 g of 0.5 N aqueous hydrochloric acid (water, 0.72 mol) was added dropwise at room temperature. The flask contents were then stirred for 2 hours at 80°C, after which filtration was carried out, followed by the dropwise addition of 6.3 g of a 5 wt% KOH/EtOH solution and 2 hours of stirring at 80°C. Vacuum concentration and filtration afforded a clear brown liquid having a viscosity of 70 $mm^2/s$. Elemental analysis was carried out, whereupon the resulting silicone oligomer was found to have a sulfur content of 20.9 wt%, a sulfide equivalent weight of 615 g/mol and the average compositional formula shown below. This oligomer was called Oligomer 5.

$$(-C_3H_6-S_4-C_3H_6-)_{0.36}(-C_8H_{17})_{0.28}(-OC_2H_5)_{1.67}SiO_{0.67}$$

Working Example 6

A one-liter separable flask equipped with a stirrer, a reflux condenser, a dropping funnel and a thermometer was charged with 231.8 g (0.43 mol) of bis(triethoxysilylpropyl)tetrasulfide (KBE-846, from Shin-Etsu Chemical Co., Ltd.), 83.0 g (0.3 mol) of octyltriethoxysilane (KBE-3083, from Shin-Etsu Chemical Co., Ltd.) and 162.0 g of ethanol, following which 13.9 g of 0.5 N aqueous hydrochloric acid (water, 0.77 mol) was added dropwise at room temperature. The flask contents were then stirred for 2 hours at 80°C, after which filtration was carried out, followed by the dropwise addition of 6.7 g of a 5 wt% KOH/EtOH solution and 2 hours of stirring at 80°C. Vacuum concentration and filtration afforded a clear brown liquid having a viscosity of 220 $mm^2/s$. Elemental analysis was carried out, whereupon the resulting silicone oligomer was found to have a sulfur content of 21.4 wt%, a sulfide equivalent weight of 599 g/mol and the average compositional formula shown below. This oligomer was called Oligomer 6.

$$(-C_3H_6-S_4-C_3H_6-)_{0.37}(-C_8H_{17})_{0.26}(-OC_2H_5)_{1.67}SiO_{0.67}$$

Working Example 7

A one-liter separable flask equipped with a stirrer, a reflux condenser, a dropping funnel and a thermometer was charged with 247.9 g (0.46 mol) of bis(triethoxysilylpropyl)tetrasulfide (KBE-846, from Shin-Etsu Chemical Co., Ltd.), 83.0 g (0.3 mol) of octyltriethoxysilane (KBE-3083, from Shin-Etsu Chemical Co., Ltd.) and 162.0 g of ethanol, following which 14.6 g of 0.5 N aqueous hydrochloric acid (water, 0.81 mol) was added dropwise at room temperature. The flask contents were then stirred for 2 hours at 80°C, after which filtration was carried out, followed by the dropwise addition of 7.0 g of a 5 wt% KOH/EtOH solution and 2 hours of stirring at 80°C. Vacuum concentration and filtration afforded a clear brown liquid having a viscosity of 2,600 $mm^2/s$. Elemental analysis was carried out, whereupon the resulting silicone oligomer was found to have a sulfur content of 21.8 wt%, a sulfide equivalent weight of 589 g/mol and the average compositional formula shown below. This oligomer was called Oligomer 7.

$$(-C_3H_6-S_4-C_3H_6-)_{0.38}(-C_8H_{17})_{0.25}(-OC_2H_5)_{1.67}SiO_{0.67}$$

Comparative Example 1

A one-liter separable flask equipped with a stirrer, a reflux condenser, a dropping funnel and a thermometer was charged with 107.8 g (0.2 mol) of bis(triethoxysilylpropyl)tetrasulfide (KBE-846, from Shin-Etsu Chemical Co., Ltd.), 276.5 g (1.0 mol) of octyltriethoxysilane (KBE-3083, from Shin-Etsu Chemical Co., Ltd.) and 162.0 g of ethanol, following which 18.9 g of 0.5 N aqueous hydrochloric acid (water, 1.05 mol) was added dropwise at room temperature. The flask contents were then stirred for 2 hours at 80°C, after which filtration was carried out, followed by the dropwise addition of 9.1 g of a 5 wt% KOH/EtOH solution and 2 hours of stirring at 80°C. Vacuum concentration and filtration afforded a clear brown liquid having a viscosity of 10 $mm^2/s$. Elemental analysis was carried out, whereupon the resulting silicone oligomer was found to have a sulfur content of 8.4 wt%, a sulfide equivalent weight of 1,533 g/mol and the average compositional formula shown below. This oligomer was called Oligomer 8.

$$(-C_3H_6-S_4-C_3H_6-)_{0.14}(-C_8H_{17})_{0.71}(-OC_2H_5)_{1.50}SiO_{0.75}$$

Comparative Example 2

A one-liter separable flask equipped with a stirrer, a reflux condenser, a dropping funnel and a thermometer was charged with 107.8 g (0.2 mol) of bis(triethoxysilylpropyl)tetrasulfide (KBE-846, from Shin-Etsu Chemical Co., Ltd.), 221.2 g (0.8 mol) of octyltriethoxysilane (KBE-3083, from Shin-Etsu Chemical Co., Ltd.) and 162.0 g of ethanol, following which 16.2 g of 0.5 N aqueous hydrochloric acid (water, 0.9 mol) was added dropwise at room temperature. The flask contents were then stirred for 2 hours at 80°C, after which filtration was carried out, followed by the dropwise addition of 7.8 g of a 5 wt% KOH/EtOH solution and 2 hours of stirring at 80°C. Vacuum concentration and filtration afforded a clear brown liquid having a viscosity of 20 $mm^2/s$. Elemental analysis was carried out, whereupon the resulting silicone oligomer was found to have a sulfur content of 9.8 wt%, a sulfide equivalent weight of 1,312 g/mol and the average compositional formula shown below. This oligomer was called Oligomer 9.

$$(-C_3H_6-S_4-C_3H_6-)_{0.17}(-C_8H_{17})_{0.67}(-OC_2H_5)_{1.50}SiO_{0.75}$$

Comparative Example 3

A one-liter separable flask equipped with a stirrer, a reflux condenser, a dropping funnel and a thermometer was charged with 107.8 g (0.2 mol) of bis(triethoxysilylpropyl)tetrasulfide (KBE-846, from Shin-Etsu Chemical Co., Ltd.), 165.9 g (0.6 mol) of octyltriethoxysilane (KBE-3083, from Shin-Etsu Chemical Co., Ltd.) and 162.0 g of ethanol, following which 13.5 g of 0.5 N aqueous hydrochloric acid (water, 0.75 mol) was added dropwise at room temperature. The flask contents were then stirred for 2 hours at 80°C, after which filtration was carried out, followed by the dropwise addition of 6.5 g of a 5 wt% KOH/EtOH solution and 2 hours of stirring at 80°C. Vacuum concentration and filtration afforded a clear brown liquid having a viscosity of 35 $mm^2/s$. Elemental analysis was carried out, whereupon the resulting silicone oligomer was found to have a sulfur content of 11.8 wt%, a sulfide equivalent weight of 1,091 g/mol and the average compositional formula shown below. This oligomer was called Oligomer 10.

$$(-C_3H_6-S_4-C_3H_6-)_{0.20}(-C_8H_{17})_{0.60}(-OC_2H_5)_{1.50}SiO_{0.75}$$

Comparative Example 4

A one-liter separable flask equipped with a stirrer, a reflux condenser, a dropping funnel and a thermometer was charged with 161.7 g (0.3 mol) of bis(triethoxysilylpropyl)tetrasulfide (KBE-846, from Shin-Etsu Chemical Co., Ltd.), 61.9 g (0.3 mol) of propyltriethoxysilane (KBE-3033, from Shin-Etsu Chemical Co., Ltd.) and 162.0 g of ethanol, following which 12.2 g of 0.5 N aqueous hydrochloric acid (water, 0.68 mol) was added dropwise at room temperature. The flask contents were then stirred for 2 hours at 80°C, after which filtration was carried out, followed by the dropwise addition of 5.9 g of a 5 wt% KOH/EtOH solution and 2 hours of stirring at 80°C. Vacuum concentration and filtration afforded a clear brown liquid having a viscosity of 350 $mm^2/s$. Elemental analysis was carried out, whereupon the resulting silicone oligomer was found to have a sulfur content of 22.2 wt%, a sulfide equivalent weight of 579 g/mol and the average compositional formula shown below. This oligomer was called Oligomer 11.

$$(-C_3H_6-S_4-C_3H_6-)_{0.33}(-C_3H_7)_{0.33}(-OC_2H_5)_{1.50}SiO_{0.75}$$

Comparative Example 5

A one-liter separable flask equipped with a stirrer, a reflux condenser, a dropping funnel and a thermometer was charged with 247.9 g (0.46 mol) of bis(triethoxysilylpropyl)tetrasulfide (KBE-846, from Shin-Etsu Chemical Co., Ltd.), 61.9 g (0.3 mol) of propyltriethoxysilane (KBE-3033, from Shin-Etsu Chemical Co., Ltd.) and 162.0 g of ethanol, following which 14.6 g of 0.5 N aqueous hydrochloric acid (water, 0.81 mol) was added dropwise at room temperature. The flask contents were then stirred for 2 hours at 80°C, after which filtration was carried out, followed by the dropwise addition of 7.0 g of a 5 wt% KOH/EtOH solution and 2 hours of stirring at 80°C. Vacuum concentration and filtration afforded a clear brown liquid having a viscosity of 800 $mm^2/s$. Elemental analysis was carried out, whereupon the resulting silicone oligomer was found to have a sulfur content of 23.6 wt%, a sulfide equivalent weight of 543 g/mol and the average compositional formula shown below. This oligomer was called Oligomer 12.

$$(-C_3H_6-S_4-C_3H_6-)_{0.38}(-C_3H_7)_{0.25}(-OC_2H_5)_{1.67}SiO_{0.67}$$

Working Examples 8 to 14, Comparative Examples 6 to 11

As shown in Tables 1 and 2, masterbatches were prepared by blending together 110 parts of oil-extended emulsion-polymerized SBR (#1712 from JSR Corporation), 20 parts of NR (common grade RSS 3), 20 parts of carbon black (common grade N234), 50 parts of silica (Nipsil AQ, from Nippon Silica Industries), 6.5 parts of the oligomers in Working Examples 1 to 7 and Comparative Examples 1 to 5 or Comparative Compound A shown below, 1 part of stearic acid, and 1 part of the antioxidant 6D (Ouchi Shinko Chemical Industrial Co., Ltd.). Next, 3 parts of zinc white, 0.5 part of the vulcanization accelerator DM (dibenzothiazyl disulfide), 1 part of the vulcanization accelerator NS (N-t-butyl-2-benzothiazolyl sulfenamide) and 1.5 parts of sulfur were added to the above blend and kneaded, giving a rubber composition.

Comparative Compound A $(EtO)_3Si-C_3H_6-S_4-C_3H_6-Si(OEt)_3$

Next, the properties of the rubber compositions in the unvulcanized form and in the vulcanized form were measured by the following methods. The results are shown in Tables 1 and 2.

Properties of Unvulcanized Composition

(1) Mooney Viscosity

Measured in accordance with JIS K 6300 after allowing 1 minute for sample to reach thermal equilibrium with viscometer; measurement was carried out for 4 minutes at 130°C. The results are expressed as numbers relative to an arbitrary value of 100 for the result in Comparative Example 11. A smaller number indicates a lower Mooney viscosity and thus a better processability.

Properties of Vulcanized Composition

(2) Dynamic Viscoelasticity

Using a viscoelastic tester (Rheometrics), measurement was carried out at 5 % dynamic strain under tension, a frequency of 15 Hz and 60°C. Using sheets having a thickness of 0.2 cm and a width of 0.5 cm as the test specimens, the clamping interval in the tester was set to 2 cm and the initial load was set to 160 g. The tan $\delta$ values are expressed as numbers relative to an arbitrary value of 100 for the result in Comparative Example 11. A smaller number indicates a smaller hysteresis loss and lower heat buildup.

(3) Wear Resistance

Testing was carried out in general accordance with JIS K 6264-2: 2005 using a Lambourn abrasion tester under the following conditions: room temperature, 25 % slip ratio. The results are expressed as numbers relative to an arbitrary

value of 100 for the reciprocal of the abrasion loss in Comparative Example 11. A larger number indicates a lower abrasion loss and excellent wear resistance.

Table 1

| | Working Example | | | | | | |
|---|---|---|---|---|---|---|---|
| | 8* | 9 | 10 | 11 | 12 | 13 | 14 |
| Recipe (pbw) | | | | | | | |
| SBR | 110 | 110 | 110 | 110 | 110 | 110 | 110 |
| NR | 20 | 20 | 20 | 20 | 20 | 20 | 20 |
| Carbon black | 20 | 20 | 20 | 20 | 20 | 20 | 20 |
| Silica | 50 | 50 | 50 | 50 | 50 | 50 | 50 |
| Stearic acid | 1 | 1 | 1 | 1 | 1 | 1 | 1 |
| Antioxidant 6C | 1 | 1 | 1 | 1 | 1 | 1 | 1 |
| Zinc white | 3 | 3 | 3 | 3 | 3 | 3 | 3 |
| Vulcanizing accelerator DM | 0.5 | 0.5 | 0.5 | 0.5 | 0.5 | 0.5 | 0.5 |
| Vulcanizing accelerator NS | 1 | 1 | 1 | 1 | 1 | 1 | 1 |
| Sulfur | 1.5 | 1.5 | 1.5 | 1.5 | 1.5 | 1.5 | 1.5 |
| Oligomer 1* | 6.5 | - | - | - | - | - | - |
| Oligomer 2 | - | 6.5 | - | - | - | - | - |
| Oligomer 3 | - | - | 6.5 | - | - | - | - |
| Oligomer 4 | - | - | - | 6.5 | - | - | - |
| Oligomer 5 | - | - | - | - | 6.5 | - | - |
| Oligomer 6 | - | - | - | - | - | 6.5 | - |
| Oligomer 7 | - | - | - | - | - | - | 6.5 |
| Properties of Unvulcanized Composition | | | | | | | |
| Mooney viscosity | 99 | 98 | 96 | 99 | 98 | 99 | 98 |
| Properties of Vulcanized Composition | | | | | | | |
| Dynamic viscoelasticity, tan $\delta$ (60°C) | 95 | 92 | 90 | 88 | 87 | 86 | 85 |
| Wear resistance | 105 | 105 | 106 | 108 | 110 | 110 | 112 |
| * Comparison Example: outside the invention | | | | | | | |

Table 2

| | Comparative Example | | | | | |
|---|---|---|---|---|---|---|
| | 6 | 7 | 8 | 9 | 10 | 11 |
| Recipe (pbw) | | | | | | |
| SBR | 110 | 110 | 110 | 110 | 110 | 110 |
| NR | 20 | 20 | 20 | 20 | 20 | 20 |
| Carbon black | 20 | 20 | 20 | 20 | 20 | 20 |
| Silica | 50 | 50 | 50 | 50 | 50 | 50 |
| Stearic acid | 1 | 1 | 1 | 1 | 1 | 1 |
| Antioxidant 6C | 1 | 1 | 1 | 1 | 1 | 1 |

(continued)

| | Comparative Example | | | | | |
|---|---|---|---|---|---|---|
| | 6 | 7 | 8 | 9 | 10 | 11 |
| Recipe (pbw) | | | | | | |
| Zinc white | 3 | 3 | 3 | 3 | 3 | 3 |
| Vulcanizing accelerator DM | 0.5 | 0.5 | 0.5 | 0.5 | 0.5 | 0.5 |
| Vulcanizing accelerator NS | 1 | 1 | 1 | 1 | 1 | 1 |
| Sulfur | 1.5 | 1.5 | 1.5 | 1.5 | 1.5 | 1.5 |
| Oligomer 8 | 6.5 | - | - | - | - | - |
| Oligomer 9 | - | 6.5 | - | - | - | - |
| Oligomer 10 | - | - | 6.5 | - | - | - |
| Oligomer 11 | - | - | - | 6.5 | - | - |
| Oligomer 12 | - | - | - | - | 6.5 | - |
| Comparative Compound A | - | - | - | - | - | 6.5 |
| Properties of Unvulcanized Composition | | | | | | |
| Mooney viscosity | 98 | 99 | 97 | 98 | 95 | 100 |
| Properties of Vulcanized Composition | | | | | | |
| Dynamic viscoelasticity, tan $\delta$ (60°C) | 112 | 110 | 108 | 102 | 102 | 100 |
| Wear resistance | 83 | 85 | 88 | 92 | 92 | 100 |

## Claims

**1.** An organopolysiloxane of average compositional formula (1) below which contains a sulfide group-containing organic group

$$(A)_a(B)_b(C)_c(R^1)_dSiO_{(4-2a-b-c-d)/2} \qquad (1)$$

wherein A is a sulfide group-containing divalent organic group, B is a monovalent hydrocarbon group of 5 to 10 carbon atoms, C is a hydrolysable group and/or a hydroxyl group, $R^1$ is a monovalent hydrocarbon group of 1 to 4 carbon atoms, and subscripts a, b, c and d satisfy the conditions $0 < 2a < 1$,$0 < b < 1$,$0 < c < 3$, $0 \leq d < 2$ and $0 < 2a+b+c+d < 4$, **characterized in that** the organopolysiloxane has a sulfide equivalent weight from 500 to 800 g/mol.

**2.** Organopolysiloxane of claim 1, wherein the sulfide group-containing divalent organic group A has formula (2) below

$$*\text{-}(CH_2)_n\text{-}S_x\text{-}(CH_2)_n\text{-}* \qquad (2)$$

wherein n is an integer from 1 to 10, x is a statistical average value from 1 to 6, and *- and -* represent bonding sites; and the hydrolysable group and/or hydroxyl group C has formula (3) below

$$*\text{-}OR^2 \qquad (3)$$

wherein $R^2$ is an alkyl group of 1 to 20 carbon atoms, an aryl group of 6 to 10 carbon atoms, an aralkyl group of 7 to 10 carbon atoms, an alkenyl group of 2 to 20 carbon atoms, or a hydrogen atom, and *- represents a bonding site.

**3.** Organopolysiloxane of claim 1 or 2, wherein B in average compositional formula (1) is a monovalent hydrocarbon group of 8 to 10 carbon atoms.

4. Organopolysiloxane of any one of the preceding claims wherein B is linear, branched or cyclic alkyl group.

5. Organopolysiloxane of claim 4 wherein B is octyl or decyl.

6. Organopolysiloxane of any one of the preceding claims wherein the sulfide group-containing divalent organic group A has formula (2) below

$$*\text{-}(CH_2)_n\text{-}S_x\text{-}(CH_2)_n\text{-}* \qquad (2)$$

wherein n is an integer from 2 to 4, x is a statistical average value from 2 to 4 and *- and -* represent bonding sites.

7. Organopolysiloxane of any one of the preceding claims wherein the sulfide equivalent weight is from 500 to 649 g/mol.

8. Organopolysiloxane of any one of the preceding claims wherein C is a hydrolysable group of formula

$$*\text{-}OR^2 \qquad (3)$$

wherein $R^2$ is an alkyl group of 1 to 3 carbon atoms and *- represents a bonding site.

9. Organopolysiloxane of any one of the preceding claims wherein in formula (1) $0.4 \leq 2a \leq 0.95$, $0.05 \leq b \leq 0.6$, $1 \leq c \leq 1.7$, $0 \leq d \leq 0.05$ and $1.5 \leq 2a+b+c+d < 4$.

10. Use of an organopolysiloxane of any one of claims 1 to 9 as a rubber compounding ingredient in a rubber composition containing a silica filler.

11. A rubber compounding ingredient comprising an organopolysiloxane of any one of claims 1 to 9.

12. Rubber compounding ingredient of claim 11 further comprising at least one type of powder, wherein the weight ratio of the organopolysiloxane (A) to the at least one type of powder (B), expressed as (A)/(B), is from 70/30 to 5/95.

13. Rubber compounding ingredient of claim 12 wherein the at least one type of powder is silica.

14. A rubber composition comprising a rubber compounding ingredient of claim 12 or 13.

15. A tire formed using a rubber composition of claim 14.

## Patentansprüche

1. Organopolysiloxan der nachstehenden mittleren Zusammensetzungsformel (1), die eine eine Sulfidgruppe enthaltende organische Gruppe enthält:

$$(A)_a(B)_b(C)_c(R^1)_dSiO_{(4-2a-b-c-d)/2} \qquad (1)$$

worin A eine eine Sulfidgruppe enthaltende, zweiwertige organische Gruppe ist, B eine einwertige Kohlenwasserstoffgruppe mit 5 bis 10 Kohlenstoffatomen ist, C eine hydrolysierbare Gruppe und/oder eine Hydroxylgruppe ist, $R^1$ eine einwertige Kohlenwasserstoffgruppe mit 1 bis 4 Kohlenstoffatomen ist und für die Indices a, b, c und d die folgende Bedingung gilt: $o < 2a < 1$, $0 < b < 1$, $0 < c < 3$, $0 \leq d < 2$ und $0 < 2a+b+c+d < 4$,
**dadurch gekennzeichnet, dass** das Organopolysiloxan ein Sulfidäquivalentgewicht von 500 bis 800 g/mol aufweist.

2. Organopolysiloxan nach Anspruch 1, worin die eine Sulfidgruppe enthaltende, zweiwertige organische Gruppe A die nachstehende Formel (2) aufweist:

$$*\text{-}(CH_2)_n\text{-}S_x\text{-}(CH_2)_n\text{-}* \qquad (2)$$

worin n eine ganze Zahl von 1 bis 10 ist, x ein statistischer Mittelwert von 1 bis 6 ist und *- und -* Bindungsstellen

darstellen; und die hydrolysierbare Gruppe und/oder Hydroxylgruppe C die nachstehende Formel (3) aufweist:

$$*\text{-OR}^2 \qquad (3)$$

worin $R^2$ eine Alkylgruppe mit 1 bis 20 Kohlenstoffatomen, eine Arylgruppe mit 6 bis 10 Kohlenstoffatomen, eine Aralkylgruppe mit 7 bis 10 Kohlenstoffatomen, eine Alkenylgruppe mit 2 bis 20 Kohlenstoffatomen oder ein Wasserstoffatom ist und *- eine Bindungsstelle darstellt.

3. Organopolysiloxan nach Anspruch 1 oder 2, worin B in der mittleren Zusammensetzungsformel (1) eine einwertige Kohlenwasserstoffgruppe mit 8 bis 10 Kohlenstoffatomen ist.

4. Organopolysiloxan nach einem der vorangegangenen Ansprüche, worin B eine unverzweigte, verzweigte oder zyklische Alkylgruppe ist.

5. Organopolysiloxan nach Anspruch 4, worin B Octyl oder Decyl ist.

6. Organopolysiloxan nach einem der vorangegangenen Ansprüche, worin die eine Sulfidgruppe enthaltende organische Gruppe A die nachstehende Formel (2) aufweist:

$$*\text{-}(CH_2)_n\text{-}S_x\text{-}(CH_2)_n\text{-}* \qquad (2)$$

worin n eine ganze Zahl von 2 bis 4 ist, x ein statistischer Mittelwert von 2 bis 4 ist und *- und -* Bindungsstellen darstellen.

7. Organopolysiloxan nach einem der vorangegangenen Ansprüche, worin das Sulfidäquivalentgewicht 500 bis 649 g/mol beträgt.

8. Organopolysiloxan nach einem der vorangegangenen Ansprüche, worin C eine hydrolysierbare Gruppe der Formel

$$*\text{-OR}^2 \qquad (3)$$

ist, worin $R^2$ eine Alkylgruppe mit 1 bis 3 Kohlenstoffatomen ist und *- eine Bindungsstelle darstellt.

9. Organopolysiloxan nach einem der vorangegangenen Ansprüche, worin in Formel (1) gilt: $0{,}4 \leq 2a \leq 0{,}95$, $0{,}05 \leq b \leq 0{,}06$, $1 \leq c \leq 1{,}7$, $0 \leq d \leq 0{,}05$ und $1{,}5 \leq 2a+b+c+d < 4$.

10. Verwendung eines Organopolysiloxans nach einem der Ansprüche 1 bis 9 als Kautschuk-Compoundierbestandteil in einer Kautschukzusammensetzung, die einen Silica-Füllstoff enthält.

11. Kautschuk-Compoundierbestandteil, der ein Organopolysiloxan nach einem der Ansprüche 1 bis 9 umfasst.

12. Kautschuk-Compoundierbestandteil nach Anspruch 11, der weiters zumindest eine Art von Pulver umfasst, wobei das Gewichtsverhältnis zwischen dem Organopolysiloxan (A) und der zumindest einen Art von Pulver (B), ausgedrückt als (A)/(B), 70/30 bis 5/95 beträgt.

13. Kautschuk-Compoundierbestandteil nach Anspruch 12, worin die zumindest eine Art von Pulver Silica ist.

14. Kautschukzusammensetzung, die einen Kautschuk-Compoundierbestandteil nach Anspruch 12 oder 13 umfasst.

15. Reifen, der unter Verwendung einer Kautschukzusammensetzung nach Anspruch 14 hergestellt wurde.

## Revendications

1. Organopolysiloxane répondant à la formule de composition moyenne (1) ci-dessous, qui contient un groupe organique contenant un groupe sulfure

$$(A)_a(B)_b(C)_c(R^1)_dSiO_{(4-2a-b-c-d)/2} \qquad (1)$$

dans lequel A est un groupe organique divalent contenant un groupe sulfure, B est un groupe hydrocarboné monovalent de 5 à 10 atomes de carbone, C est un groupe hydrolysable et/ou un groupe hydroxyle, $R^1$ est un groupe hydrocarboné monovalent de 1 à 4 atomes de carbone, et les indices a, b, c et d satisfont les conditions $0 < 2a < 1$, $0 < b < 1$, $0 < c < 3$, $0 \leq d < 2$ et $0 < 2a + b + c + d < 4$, **caractérisé en ce que** l'organopolysiloxane présente un poids équivalent de sulfure de 500 à 800 g/mol.

**2.** Organopolysiloxane selon la revendication 1, **caractérisé en ce que** le groupe organique divalent A contenant un groupe sulfure répond à la formule (2) ci-dessous

$$*-(CH_2)_n-S_x-(CH_2)_n-* \qquad (2)$$

dans lequel n est un entier de 1 à 10, x est une valeur moyenne statistique de 1 à 6, et *- et -* représentent des sites de liaison ; et le groupe hydrolysable et/ou le groupe hydroxyle C répondent à la formule (3) ci-dessous

$$*-OR^2 \qquad (3)$$

dans lequel $R^2$ est un groupe alkyle de 1 à 20 atomes de carbone, un groupe aryle de 6 à 10 atomes de carbone, un groupe aralkyle de 7 à 10 atomes de carbone, un groupe alcényle de 2 à 20 atomes de carbone, ou un atome d'hydrogène, et *- représente un site de liaison.

**3.** Organopolysiloxane selon la revendication 1 ou 2, dans lequel B dans la formule de composition moyenne (1) est un groupe hydrocarboné monovalent de 8 à 10 atomes de carbone.

**4.** Organopolysiloxane selon l'une quelconque des revendications précédentes, dans lequel B est un groupe alkyle linéaire, ramifié ou cyclique.

**5.** Organopolysiloxane selon la revendication 4, dans lequel B représente un octyle ou un décyle.

**6.** Organopolysiloxane selon l'une quelconque des revendications précédentes, dans lequel le groupe organique divalent contenant un groupe sulfure A répond à la formule (2) ci-dessous

$$*-(CH_2)_n-S_x-(CH_2)_n-* \qquad (2)$$

dans lequel n est un entier de 2 à 4, x est une valeur moyenne statistique de 2 à 4 et *- et -* représentent des sites de liaison.

**7.** Organopolysiloxane selon l'une quelconque des revendications précédentes, dans lequel le poids équivalent de sulfure est de 500 à 649 g/mol.

**8.** Organopolysiloxane selon l'une quelconque des revendications précédentes, dans lequel C est un groupe hydrolysable répondant à la formule

$$*-OR^2 \qquad (3)$$

dans lequel $R^2$ est un groupe alkyle de 1 à 3 atomes de carbone et *- représente un site de liaison.

**9.** Organopolysiloxane selon l'une quelconque des revendications précédentes, dans lequel dans la formule (1) $0,4 \leq 2a \leq 0,95$, $0,05 \leq b \leq 0,6$, $1 \leq c \leq 1,7$, $0 \leq d \leq 0,05$ et $1,5 \leq 2a + b + c + d < 4$.

**10.** Utilisation d'un organopolysiloxane selon l'une quelconque des revendications 1 à 9 comme ingrédient de formulation de caoutchouc dans une composition de caoutchouc contenant une charge de silice.

**11.** Ingrédient de formulation de caoutchouc comprenant un organopolysiloxane selon l'une quelconque des revendications 1 à 9.

**12.** Ingrédient de formulation de caoutchouc selon la revendication 11, comprenant en outre au moins un type de poudre, dans lequel le rapport pondéral de l'organopolysiloxane (A) audit au moins un type de poudre (B), exprimé sous la

forme (A)/(B), est de 70/30 à 5/95.

**13.** Ingrédient de formulation de caoutchouc selon la revendication 12, dans lequel le au moins un type de poudre est de la silice.

**14.** Composition de caoutchouc comprenant un ingrédient de formulation de caoutchouc selon la revendication 12 ou 13.

**15.** Pneumatique formé en utilisant une composition de caoutchouc selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S5120208 B
- JP 2004525230 A
- JP 2004018511 A
- JP 2002145890 A
- US 6229036 B
- JP 2005008639 A
- JP 2008150546 A
- JP 2010132604 A
- JP 4571125 B
- US 6414061 B
- JP 5574063 B
- WO 201402750 A
- EP 2857449 A
- JP 2014214091 A
- EP 2679617 A
- WO 2014129664 A
- EP 2960285 A